# EUROPEAN PATENT SPECIFICATION

(11) **EP 2 199 119 B1**
(45) Date of publication and mention of the grant of the patent: **20.04.2011**
(21) Application number: 08172161.5
(22) Date of filing: 18.12.2008
(51) Int. Cl.: B60G 7/00, B60G 9/02, F16C 11/06

(54) **Bearing element for the articulated connection of at least one control element with a vehicle part**
Lagerelement für die Gelenkverbindung von mindestens einem Steuerelement mit einem Fahrzeugteil
Élément de roulement pour la connexion articulée d'au moins un élément de commande avec une pièce de véhicule

(43) Date of publication of application: 23.06.2010
(73) Proprietor: IVECO MAGIRUS AG, D-89079 Ulm (DE)
(72) Inventor: Baur, Guenter, 73340 Amstetten (DE); Reinke, Oliver, 89155 Erbach (DE)
(74) Representative: Borsano, Corrado

(56) References cited:
- WO-A-00/51833
- WO-A-03/076218
- DE-A1- 4 004 679
- DE-A1- 4 420 489
- DE-C1- 3 843 820
- DE-U1-202006 000 285

## Description

The present invention relates to a bearing element for the articulated connection of at least one control element with a vehicle part, in particular with an axle body of a vehicle, corresponding to the preamble of claim 1. Document DE-A-40 04 679 is related to a bearing element for the articulated connection of at least one control element with a vehicle part. This document discloses all features of the preamble of the present claim 1.

Moreover, document DE-A-44 20 489 discloses a ball-shaped bearing element for connecting a control element with a vehicle part, in particular with an axle body of a vehicle, as defined by the features of the preamble of claim 1.

In vehicles, especially heavy goods vehicles, a V-control element, or two longitudinal control elements disposed in a V-shape, are used to connect an axle body in the centre of the vehicle frame with the lateral longitudinal frame supports. Each arm of the V-control element, or each longitudinal control element, is attached to the frame on one hand, and, on the other, to a bearing element mounted on an axle body housing. The V-control element, or the longitudinal control elements, forms a top control element which, together with a bottom control element for connecting the underside of the axle body housing with the frame, completes an axle body suspension.

Such an axle body suspension permits, in particular, raising or lowering of the vehicle frame in relation to the axle body.

The arrangement of the bearing element on the axle body, however, poses problems with regard to lowering of the frame. In generally used V-control elements, the arms converge on the axle body side, meeting up at a common joint with a horizontal pivot axis. This bearing joint is mounted on the axle body housing. Given the size of such a pivot bearing, the overall construction height of the unit comprising axle body housing and bearing element is relatively high, so that this bearing element projects at least partially above the top edge of the vehicle frame.

To reduce the construction height, the typical construction shape of the V-control element was dispensed with and, instead, two longitudinal control elements converging together in a V-shape were used. The frame-side connection points are positioned as in the general version of the V-control element. The axle body-side connection points are displaced in the direction of the frame-side connection points. In this case, the bearing element of the axle body-side connection points is a horizontal plate which is rigidly attached to the axle body housing. Compared to the embodiment described above, however, the two longitudinal control elements are shortened by approximately the length by which the projecting section of the plate projects in the direction of the longitudinal control elements. This means the bearing element can be made very flat, reducing the construction height of the overall axle body unit as a whole. The problematic aspect is that, when the axle suspension is viewed from the side, the V-shaped converging longitudinal control elements forming the top control element of the axle body suspension are shortened with respect to the bottom control element and do not, therefore, form a parallelogram. When the vehicle frame is raised or lowered in relation to the axle body, this causes an inclination of the vehicle axle, which is undesirable for constructive reasons. Furthermore, the additional plate of the bearing element is relatively heavy and expensive. The task of this invention is therefore to provide a bearing element of the aforementioned type, which is of a low construction height to enable problem-free lowering of the vehicle frame relative to the vehicle part to be connected to it, that is the axle body in particular, and also offers cost and weight benefits compared to the prior art solutions.

This task is solved according to the invention by a bearing element with the features of claim 1.

The bearing element according to the invention comprises a plug, which is rigidly mounted, through welding, for example, on the vehicle part to be connected, such as the axle body. The plug rests inside a ring-shaped laminated bearing, which is in turn enclosed inside an enclosing element which can be formed from clips screwed together, for example. The enclosing element is rigidly connected with the end of the control element.

The laminated bearing has, inwards to outwards, a series of ring-shaped elastic and non-elastic layers which give the bearing a certain elasticity on the one hand, and, on the other, the rigidity required to hold the plug inside the laminated bearing, resp. the enclosing element. These properties allow the enclosing element to tilt slightly in relation to the plug, so that the control element can execute an inclining movement in relation to the plug, and, therefore, in relation to the axle body.

Such a bearing element can be made with a low construction height so that, even when mounted directly on the axle body housing, the total height remains relatively low. The axle body-side articulation point of the control element is kept above the axle body so that the control element, when viewed from the side, can have the same length in the longitudinal direction of the vehicle as the bottom control element on the axle body underside. This alleviates the constructive problems which arise with the conventional bearing when raising or lowering the vehicle frame. The bearing element according to the invention is also relatively inexpensive to manufacture, and is of a comparably low weight.

The elastic layers of the laminated bearing are preferably made of an elastomer, or from rubber, and the non-elastic layers are made of metal.

In one preferred embodiment, the plug is approximately spherical-shaped.

Here, the bearing element forms a ball and socket joint in which the spherical-shaped plug is held elastically, but with the required stability, in the joint enclosure. Further, a circumferential rib is provided around the circumference of the plug.

This rib increases the hold of the plug in the laminated bearing and facilitates the assembly of the laminated bearing on the plug.

In another preferred embodiment, the enclosing element is formed by at least two clips which are screwed together. These clips exert a pre-tensioning force on the laminated bearing when they are screwed together.

A circumferential rib is preferably provided around the circumference of the laminated bearing, which rests in a corresponding groove in the inner circumference of the enclosing element.

The groove in the laminated bearing increases the hold of the laminated bearing in the enclosing element and facilitates assembly of the various parts with each other. In another preferred embodiment, the plug is welded onto the axle body.

The plug preferably has a thickening and a constriction between the thickening and the axle body, and the enclosing element has, on its underside facing the axle body, an opening whose edge encloses the plug at the level of the constriction, and whose width is less than the thickening of the plug.

In this case, the enclosing element encompasses the plug at its constriction, whilst the thickening is enclosed centrally inside the enclosing element at a level above the opening in the laminated bearing. The width of the opening is kept small enough to ensure that, even if the laminated bearing were destroyed in the event of damage, the plug cannot slip out of the lower opening of the enclosing element.

A preferred embodiment of the invention will be described below with reference to the enclosed drawings.
- Fig. 1: is a perspective view of an embodiment of the bearing element according to the invention;
- Fig. 2: shows the bearing element of Fig. 1 in a perspective partial view;
- Fig. 3: is a vertical section through the bearing element of Fig. 1;
- Fig. 4: is a top-plan view of the bearing element of Fig. 1;
- Fig. 5: is a view of the bearing element of Fig. 1 from the top, in which the laminated bearing is omitted;
- Fig. 6: is a perspective view of the present embodiment of the bearing element according to the invention, shown fitted in a heavy goods vehicle;

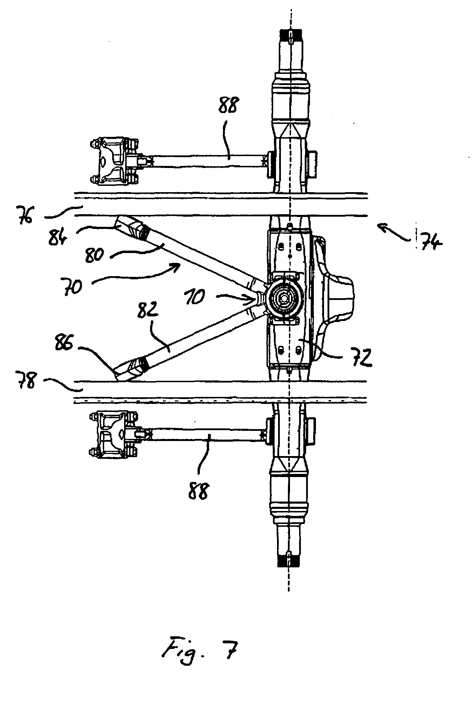

- Fig. 7: is a top plan view of the fitted bearing element of Fig. 6; and
- Fig. 8 and 9: show the bearing element when fitted, in a side view, in two different lifting positions of the heavy goods vehicle.

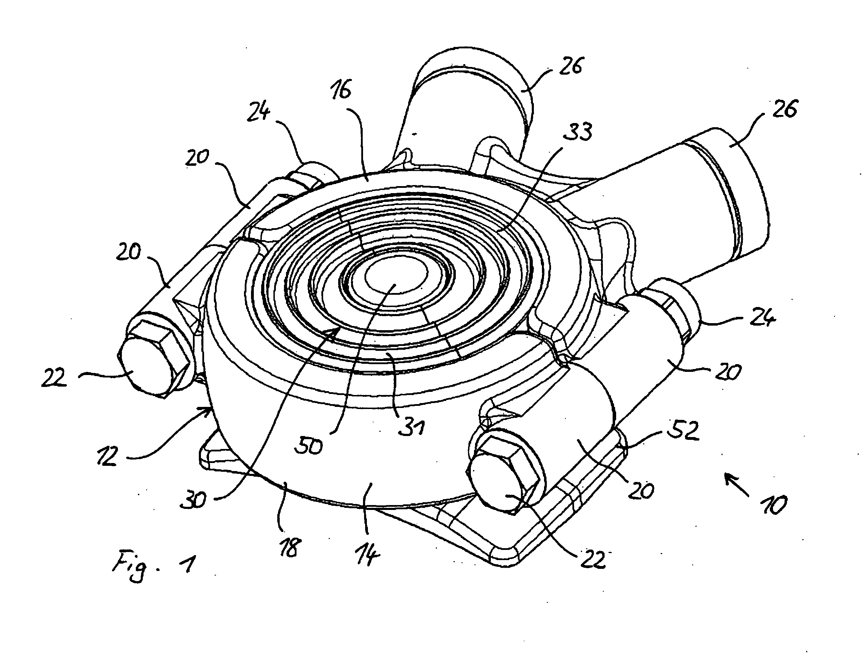

The bearing element 10 shown in Fig. 1 serves to connect a longitudinal control element not shown in more detail here with an axle body of a vehicle. In this case, the longitudinal control element is contrived as a V-control element with two arms which converge in the direction of bearing element (10), and form an angle with each other. The bearing element according to the invention could also conceivably be used to connect one or more control elements with another vehicle part which is held movably relative to the frame.

Bearing element 10 has a ring-shaped enclosing element 12 formed by two joined-up clips 14,16. These clips 14,16 may be cast-forged metal parts. Each clip 14,16 has a semicircular enclosing section 18, to whose lateral ends cylindrical sleeves 20 are moulded in one piece to accommodate a screw bolt 22. In the assembled state of clips 14,16, on each side of bearing element 10, a sleeve 20 of a first clip 14 lies axially against a corresponding sleeve 20 of the second bearing element 16, so that a screw bolt 22 can be inserted through both sleeves 20. By screwing a nut 24 onto the end of screw bolt 22, sleeves 20 on each side of bearing element 10 can be tightened up and connected to form a unit.

Adjoining clip 16 there are receiving elements 26 for the ends of the arms, which are not shown, of the V control element. These receiving elements 26 are shaped like cylinder sections and form an angle in relation to each other which coincides with the angle between the arms of the V-control element. Both receiving elements 26 lie in the same plane as the ring plane of enclosing element 12, in which the cylinder shafts of sleeves 20, and of screw bolts 22, also lie. In the fitted position of bearing element 10, this plane is essentially horizontal.

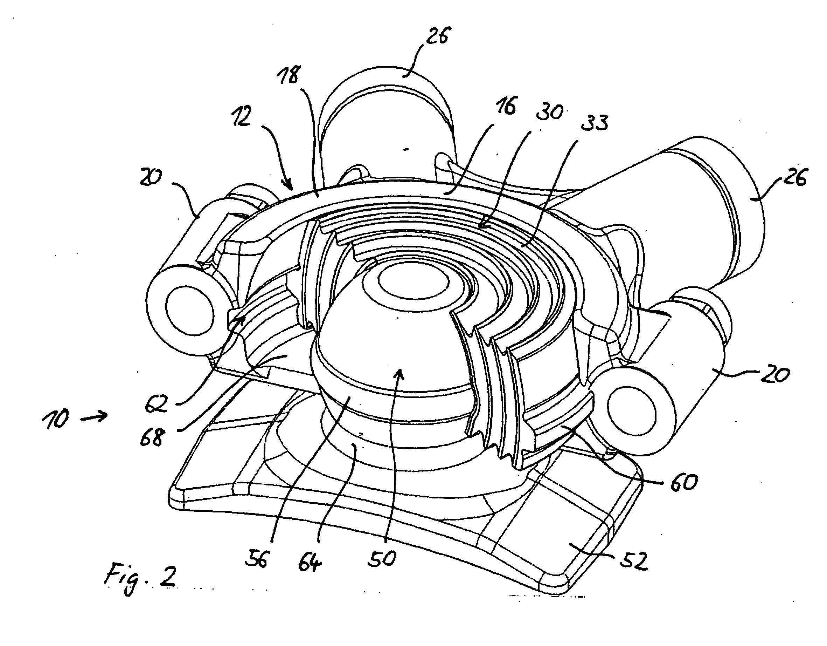

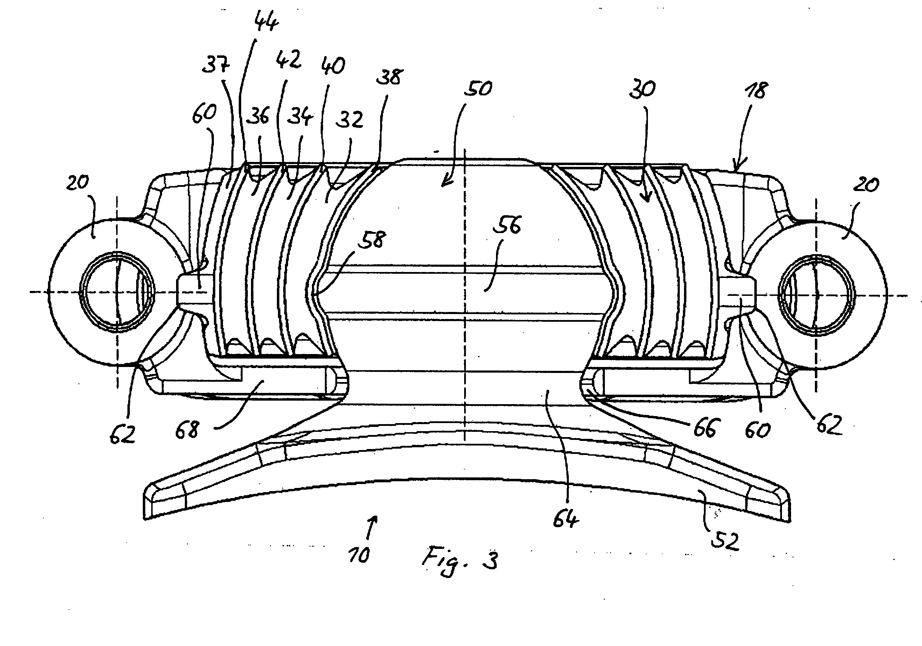

The two semicircular enclosing sections 18 of clips 14,16 enclose a flat cylindrical space inside which there is a ring-shaped laminated bearing 30, made up of two halves 31 and 33. In Fig. 2 and 3, this laminated bearing 30 is shown cut open to render its construction clearer. Laminated bearing 30 has, inwards to outwards, a series of alternating ring-shaped elastic and non-elastic layers. In this case, it is a rubber-metal laminated bearing, whose elastic layers 32,34,36,37 (see Fig. 3) are made from an elastomer or from rubber, while the non-elastic layers 38,40,42,44 are made from metal. The number and arrangement of the different layers may vary in line with requirements. In this embodiment the innermost layer 38 is made of metal, followed by an elastomer layer 32 and so on, until the laminated bearing is finished off on the outside by an elastomer layer 37. In the present case, there are a total of four metal layers 38,40,42,44 separated by three inner elastomer layers 32,34,36.

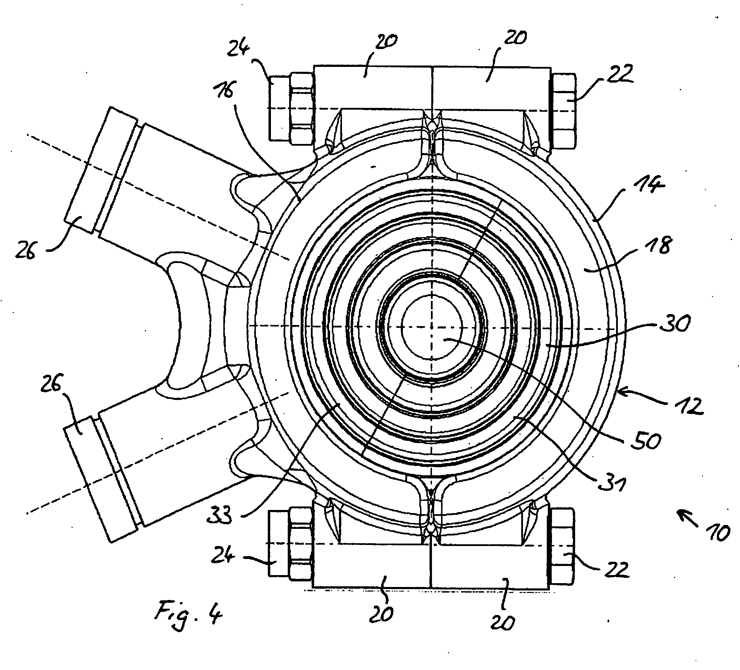

In the middle of ring-shaped laminated bearing 30 there is a plug 50 which is welded onto the top side of axle body 52, which is only partially shown in Fig. 1 to 5. Plug 50 is essentially spherical, and slightly flattened on its top side 54. Laminated bearing 30 encloses plug 50 in such a way that the innermost metal layer 38 of laminated bearing 30 lies directly, or with only slight play, on the surface of plug 50. The innermost layer 38 of laminated bearing 30 is cambered accordingly and corresponds to the section of a stripe-shaped ring out of a spherical surface, with the centre of this imaginary sphere coinciding with the spherical centre of plug 50. The outwardly following layers 32,40,34,42,36,44 of laminated bearing 30 follow this camber, i.e. the centre of their camber also coincides with the centre of the plug.

On the circumference of plug 50 there is a circular circumferential rib 56 disposed approximately at the height of the maximum diameter of plug 50. This rib 56 rests in a corresponding ring-shaped recess 58 or groove in the innermost layer 38 of laminated bearing 30. Rib 56 improves the hold of plug 50 in laminated bearing 30.

The laminated bearing 30 itself also has a circular circumferential rib 60 on its outer circumference, which is moulded as part of the outer elastomer/rubber layer 37 of laminated bearing 30. This rib 60 of laminated bearing 30 rests in a ring-shaped groove 62 on the inside of enclosing sections 18 and improves the hold of laminated bearing 30 in the enclosing sections 18 of clips 14,16, and its assembly. The circular circumferential ribs 56 und 60 lie in the same ring plane standing perpendicular to the axis of symmetry of plug 50, and also ring-shaped groove 62 in the enclosing sections 18 for accommodating rib 60 of laminated bearing 30.

As a result of its spherical shape, plug 50 has a thickening about half way up, which is additionally reinforced by circumferential rib 56. Thus the diameter of plug 50 perpendicular to its axis of symmetry is at its maximum here. Plug 50 rests in laminated bearing 30 by its thickening. Between the thickening and axle body 52, onto which plug 50 is welded, plug 50 has a ring-shaped constriction 64, whose diameter perpendicular to the axis of symmetry of plug 50 is smaller than at the level of the thickening. At the level of this constriction 64, plug 50 is tightly enclosed by an opening 66 in the underside of enclosing element 12. The width of this opening 66 is larger than the diameter of constriction 64 to accommodate plug 50 with a slight degree of play at this level, but is smaller than the diameter of plug 50 at the level of its thickening. Hence it is impossible for enclosing element 12 to slip upwards, i.e. in the direction of the axis of symmetry of plug 50, and become detached from the latter, but, instead, plug 50 is held securely in opening 66. Opening 66 is contrived in the approximately plate-shaped base 68 of enclosing element 12, which downwardly limits the inner space of the latter for accommodating laminated bearing 30, but leaves the above-described opening 66 free to accommodate plug 50. Base 68 therefore comprises two halves, which are each moulded as one piece with the enclosing section 18 of corresponding clip 14,16.

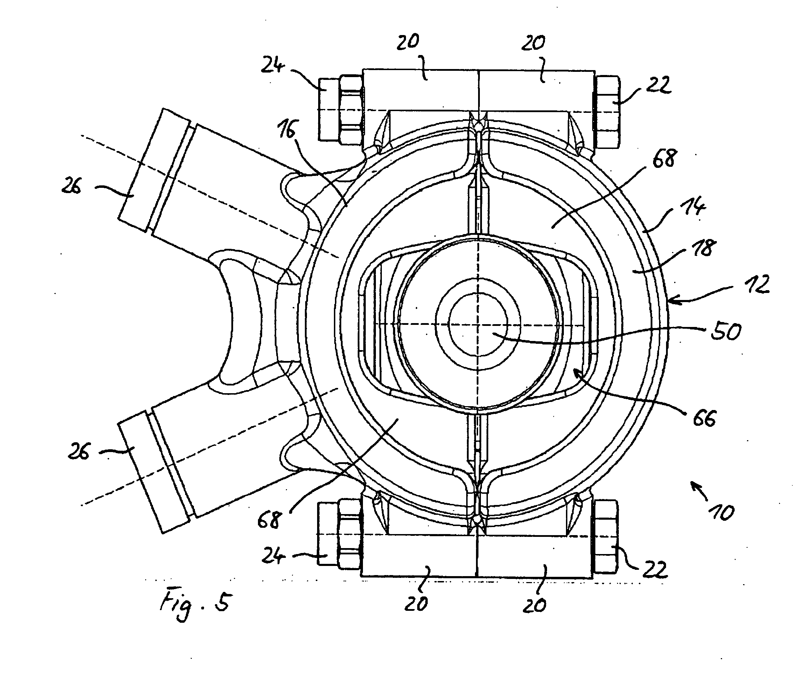

The shape of base 68 is shown particularly clearly in Fig. 5. Here, bearing element 10 is shown in a view from above, without laminated bearing. Fig. 5 reveals that, to hold plug 50 securely in opening 66, it is entirely sufficient if the width of opening 66 is smaller in just one diameter direction than the diameter of the thickening of plug 50 in this direction. In another direction perpendicular thereto, the length of opening 66 may be longer. This is useful to allow a slight tilting motion of enclosing element 12 around plug 50. If laminated bearing 30 is destroyed in the event of damage, plug 50 is still held securely in opening 66, at the level of its constriction 64, thanks to its thickening.

To assemble bearing element 10, both halves 31 and 33 of laminated bearing 30 are first placed around plug 50 to enclose the latter. To better transfer the forces occurring on bearing element 10, halves 31 and 33 may be rotated relative to clips 14,16 by any angle around the vertical axis of plug 50. Subsequently, or simultaneously, the two clips 14,16 of enclosing element 12 are placed around laminated bearing 30 so that rib 60 lies in the groove 62 of enclosing element 12. Finally, screw bolts 22 are inserted through sleeves 20, nuts 24 are added and bearing element 10 is screwed together to form a unit. Due to the screwing action, laminated bearing 30 is pre-tensioned by compressing elastomer/rubber layers 32,34,36,37. Receiving elements 26 can then accommodate the arms of the V-control element.

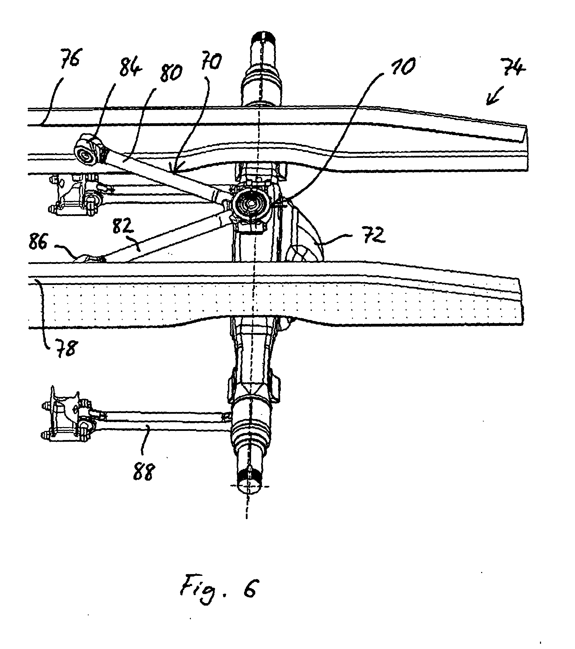

Fig. 6 shows the above-described bearing element 10 in connection with a V-control element 70, which connects the axle body 72 of a heavy goods vehicle 74 with its longitudinal frame supports 76,78. Each arm 80,82 of V-control element 70 is pivotably connected with the inside of a longitudinal support 76,78 via a corresponding joint 84, 86, while the opposite ends of arms 80,82 converge in a V-shape at bearing element 10 and are held there in their receiving elements 26. V-control element 70 can thus easily be pivoted up and down relative to the vehicle frame.

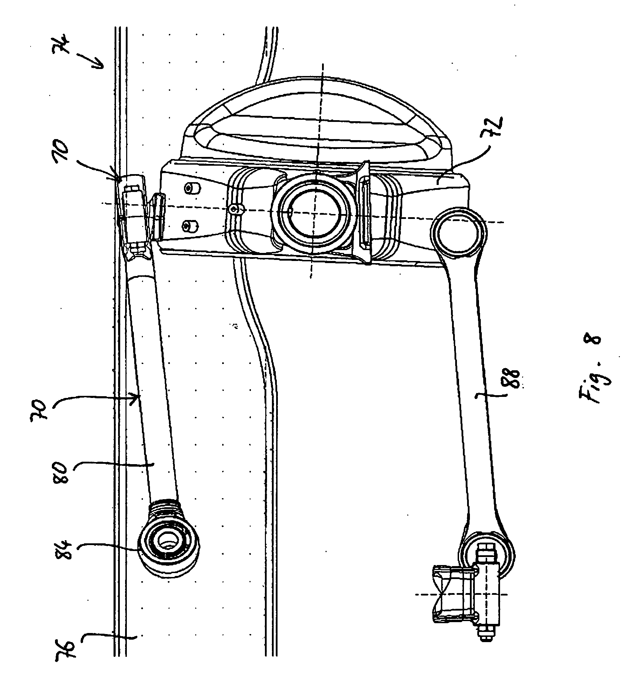

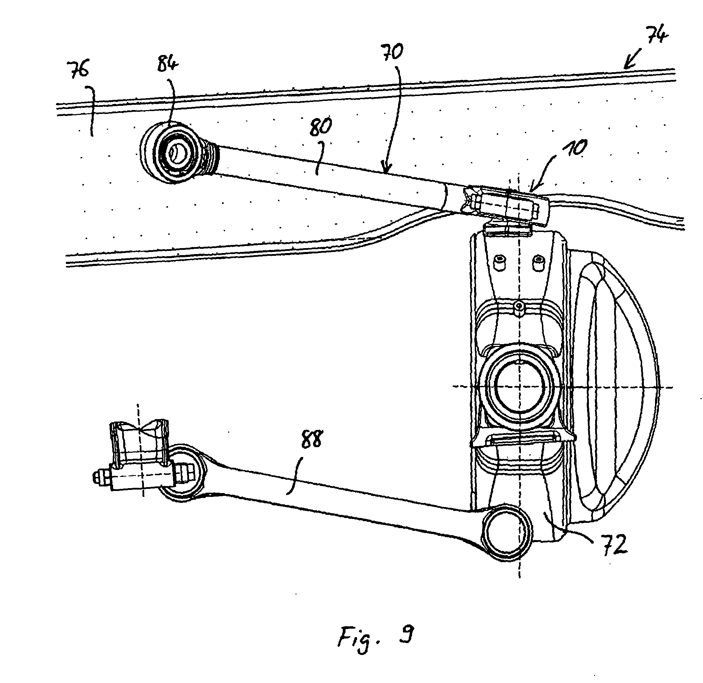

This pivot movement is enabled by the construction of bearing element 10 which connects axle body 72 with V-control element 70. Plug 50 which is rigidly attached to axle body 72 can execute a slight tilting movement inside enclosing element 12 due to the elasticity of laminated bearing 30. This is clear in Fig. 8 and 9, which show vehicle 74 in a position in which the vehicle frame is lowered relative to axle body 72 (Fig. 8) on the one hand, and, on the other, in a position in which it is lifted relative to axle body 72 (Fig. 9). The suspension of axle body 72 on the vehicle frame is completed with a pair of bottom control elements 88, which pivotably connect the underside of axle body 72 with a component that is flange-mounted to the vehicle frame. Looking at the axle suspension from the side view, bottom control elements 88 run approximately parallel to arms 80,82 of V-control element 70. V-control element 70 therefore forms a top control element which completes bottom control elements 88 to form an axle suspension. As arms 80,82 of V-control element 70 and bottom control elements 88 are approximately the same length when viewed from the side, axle body 72 is held parallel when the vehicle frame is raised or lowered with respect to axle body 72, which is desirable for constructive reasons.

The inclining movement of enclosing element 12, which has to be executed during the lifting or lowering movement, is clearly visible in Fig. 8 and 9. As already mentioned, the length of opening 66 on the underside of enclosing element 12 (Fig. 5) is big enough in the longitudinal vehicle direction to permit this pivot movement. During the inclining movement, plug 50 inside enclosing element 12 is rotated slightly around its spherical centre, which is easily permitted by the elastic properties of laminated bearing 30. In its outermost angle positions as shown in Fig. 8 and 9, laminated bearing 30 exercises a slight return force on plug 50. This helps to hold plug 50 stable in ring bearing 30 resp. inside enclosing element 12. Bearing element 10 is constructed to be relatively flat, so that, even when mounted on axle body 72, it does not substantially increase the construction height in the area between the longitudinal frame supports 76,78.

## Claims

1. Bearing element (10) for the articulated connection of at least one control element (70) with a vehicle part, in particular with an axle body (52,72) of a vehicle (74), comprising a plug (50) mounted on the vehicle part, a ring-shaped enclosing element (12) which is connected to one end of control element (70), and a ring-shaped laminated bearing (30) which is enclosed inside enclosing element (12) under pre-tension, and inside which lies plug (50), said laminated bearing (30) having an inwards to outwards series of ring-shaped elastic and non-elastic layers, **characterised in that** plug (50) has a thickening, and a constriction (64) between the thickening and the axle body (52,72), and **in that** enclosing element (12) has, on its underside facing axle body (52,72), an opening whose edge encompasses plug (50) at the level of constriction (64), and whose width is smaller than the thickness of the thickening of plug (50).

2. Bearing element according to claim 1, **characterised in that** the elastic layers (32,34,36,37) of laminated bearing (30) are made from an elastomer or rubber, and the non-elastic layers (30,40,42,44) are made from metal.

3. Bearing element according to claim 1 or 2, **characterised in that** plug (50) is contrived to be approximately spherical-shaped.

4. Bearing element according to one of claims 1 to 3, **characterised in that** a circumferential rib (56) is provided around the circumference of plug (50).

5. Bearing element according to one of the previous claims, **characterised in that** enclosing element (12) is formed by at least two clips (14,16) which are screwed together.

6. Bearing element according to one of the previous claims, **characterised in that** a circumferential rib (60) is provided around the circumference of laminated bearing (30), which rests in a corresponding groove (62) around the inner circumference of enclosing element (12).

7. Bearing element according to one of the previous claims **characterised in that** plug (50) is welded onto axle body (72).

## Patentansprüche

1. Lagerelement (10) für die angelenkte Verbindung zumindest eines Steuerelements (70) mit einem Fahrzeugteil, insbesondere mit einem Achsschaft (52, 72) eines Fahrzeugs (74), umfassend einen Zapfen (50), der an dem Fahrzeugteil montiert ist, ein ringförmiges Einschlusselement (12), das mit einem Ende des Steuerelements (70) verbunden ist, und ein ringförmiges mehrschichtiges Lager (30), das innerhalb des Einschlusselements (12) unter Vorspannung eingeschlossen ist und in welchem der Zapfen (50) liegt, wobei das mehrschichtige Lager (30) von innen nach außen eine Reihe von ringförmigen elastischen und nicht elastischen Schichten aufweist, **dadurch gekennzeichnet, dass** der Zapfen (50) eine Verdickung und eine Verengung (64) zwischen der Verdickung und dem Achsschaft (52, 72) aufweist, und dass das Einschlusselement (12) an seiner Unterseite, die dem Achsschaft (52, 72) zugewandt ist, eine Öffnung aufweist, deren Rand den Zapfen (50) auf der Höhe der Verengung (64) umgibt, und dessen Breite kleiner als die Dicke der Verdickung des Zapfens (50) ist.

2. Lagerelement nach Anspruch 1,
**dadurch gekennzeichnet, dass**
die elastischen Schichten (32, 34, 36, 37) des mehrschichtigen Lagers (30) aus einem Elastomer oder Kautschuk hergestellt sind, und die nichtelastischen Schichten (30, 40, 42, 44) aus Metall hergestellt sind.

3. Lagerelement nach Anspruch 1 oder 2,
**dadurch gekennzeichnet, dass**
der Zapfen (50) derart ausgebildet ist, dass er annähernd kugelförmig ist.

4. Lagerelement nach einem der Ansprüche 1 bis 3,
**dadurch gekennzeichnet, dass**
eine Umfangsrippe (56) um den Umfang des Zapfens (50) herum vorgesehen ist.

5. Lagerelement nach einem der vorhergehenden Ansprüche,
**dadurch gekennzeichnet, dass**
das Einschlusselement (12) durch zumindest zwei Klemmen (14, 16) gebildet ist, die zusammengeschraubt sind.

6. Lagerelement nach einem der vorhergehenden Ansprüche,
**dadurch gekennzeichnet, dass**
eine Umfangsrippe (60) um den Umfang des mehrschichtigen Lagers (30) herum vorgesehen ist, die in einer entsprechenden Nut (62) um den Innenumfang des Einschlusselements (12) herum ruht.

7. Lagerelement nach einem der vorhergehenden Ansprüche,
**dadurch gekennzeichnet, dass**
der Zapfen (50) auf den Achsschaft (72) geschweißt ist.

## Revendications

1. Elément de roulement (10) pour le raccordement articulé d'au moins un élément de commande (70) avec une pièce de véhicule, en particulier avec un corps d'essieu (52, 72) d'un véhicule (74), comprenant un bouchon (50) monté sur la pièce de véhicule, un élément enveloppant en forme de bague (12) qui est raccordé à une extrémité de l'élément de commande (70), et un roulement stratifié en forme de bague (30) qui est enveloppé à l'intérieur de l'élément enveloppant (12) sous pré-tension, et à l'intérieur duquel se trouve le bouchon (50), ledit roulement stratifié (30) comportant une série de l'intérieur vers l'extérieur de couches élastiques et non élastiques en forme de bague, **caractérisé en ce que** le bouchon (50) présente un épaississement, et un étranglement (64) entre l'épaississement et le corps d'essieu (52, 72), et **en ce que** l'élément enveloppant (12) présente, sur sa face de dessous en regard du corps d'essieu (52, 72), une ouverture dont le bord englobe le bouchon (50) au niveau de l'étranglement (64), et dont la largeur est plus petite que l'épaisseur de l'épaississement du bouchon (50).

2. Elément de roulement selon la revendication 1, **caractérisé en ce que** les couches élastiques (32, 34, 36, 37) du roulement stratifié (30) sont constituées d'un élastomère ou caoutchouc, et les couches non élastiques (30, 40, 42, 44) sont constituées de métal.

3. Elément de roulement selon la revendication 1 ou 2, **caractérisé en ce que** le bouchon (50) est conçu pour avoir une forme approximativement sphérique.

4. Elément de roulement selon l'une des revendications 1 à 3, **caractérisé en ce qu'**une nervure circonférentielle (56) est prévue autour de la circonférence du bouchon (50).

5. Elément de roulement selon l'une des revendications précédentes, **caractérisé en ce que** l'élément enveloppant (12) est formé par au moins deux attaches (14, 16) qui sont vissées ensemble.

6. Elément de roulement selon l'une des revendications précédentes, **caractérisé en ce qu'**une nervure circonférentielle (60) est prévue autour de la circonférence du roulement stratifié (30), qui repose dans une rainure (62) correspondante autour de la circonférence interne de l'élément enveloppant (12).

7. Elément de roulement selon l'une des revendications précédentes, **caractérisé en ce que** le bouchon (50) est soudé sur le corps d'essieu (72).
